# EUROPÄISCHE PATENTANMELDUNG

(11) **EP 3 915 855 A1**
(43) Veröffentlichungstag der Anmeldung: **01.12.2021**
(21) Anmeldenummer: 21169368.4
(22) Anmeldetag: 20.04.2021
(51) Int. Cl.: B61L 23/04, B61L 27/00, B61L 25/02, B61L 15/00, G06N 3/04, G06N 3/08

(54) **OPTISCHE SCHIENENWEGERKENNUNG**

(30) Priorität: 28.05.2020 DE 102020206717
(71) Anmelder: Siemens Mobility GmbH, 81739 München (DE)
(72) Erfinder: Sema, Albi, 10115 Berlin (DE)

(57) **Zusammenfassung**

Die Erfindung betrifft ein Verfahren zum Erstellen eines Trainings-Datensatzes für eine optische Schienenwegerkennung, mit den folgenden Schritten:
- Erzeugung von ersten Liniengraphiken, die den Verlauf von Schienen schematisch darstellen, aus realen Bildern von Schienen;
- Trainieren von erzeugenden gegnerischen neuronalen Netzwerken, wobei die erzeugenden gegnerischen neuronalen Netzwerke ein erzeugendes Netzwerk und ein klassifizierendes Netzwerk umfassen, wobei das erzeugende Netzwerk jeweils eine erste Darstellung von Schienen aus den ersten Liniengraphiken erzeugt und das klassifizierende Netzwerk eine Einschätzung vornimmt, ob die ersten Darstellungen durch das erzeugende Netzwerk erzeugt wurden oder eine reale Aufnahme von Schienen beinhalten, wobei das Trainieren so lange erfolgt, bis das erzeugende Netzwerk finale erste Darstellungen erzeugt, die vom klassifizierenden Netzwerk nicht mehr von realen Aufnahmen unterschieden werden können, wobei während des Trainierens Darstellungs-Parameter erlernt werden, anhand derer das erzeugende Netzwerk Darstellungen von Schienen aus Liniengraphiken erzeugen kann;
- Erzeugen von zweiten Liniengraphiken mit vorgegebenen Eigenschaften;
- Erzeugen von zweiten Darstellungen von Schienen aus den zweiten Liniengraphiken anhand der erlernten Darstellungs-Parameter des erzeugenden Netzwerks, wobei eine Mehrzahl der zweiten Darstellungen von Schienen den Trainings-Datensatz für die optische Schienenwegerkennung bilden.

## Beschreibung

Die Erfindung betrifft ein Verfahren zum Erstellen eines Trainings-Datensatzes für eine optische Schienenwegerkennung. Außerdem betrifft die Erfindung ein Verfahren zum Trainieren einer optischen Schienenwegerkennung. Ferner betrifft die Erfindung ein Verfahren zur Positionsbestimmung eines Schienenfahrzeugs und eine Recheneinheit zur Durchführung des Verfahrens zur Positionsbestimmung.

Optische Schienenwegerkennung kann mittels neuronalen Netzwerken erfolgen, wobei hierzu eine große Anzahl von digitalen Bildern von verschiedenen Schienenstrecken benötigt wird, um das neuronale Netzwerk erfolgreich zu trainieren. Unklare Lizenzbedingungen von verfügbaren Bildern sowie die generell schlechte Verfügbarkeit solcher Bilder im Vergleich zu beispielsweise Bildern von Straßen erlauben derzeit kein solches Training.

Der Erfindung liegt die Aufgabe zugrunde, ein Verfahren zum Erstellen eines Trainings-Datensatzes für eine optische Schienenwegerkennung bereitzustellen, das diese Beschränkungen umgeht. Eine weitere Aufgabe der Erfindung ist es, ein Trainingsverfahren für eine optische Schienenwegerkennung, ein Verfahren zur Positionsbestimmung sowie eine Recheneinheit zur Durchführung des Verfahrens zur Positionsbestimmung zur Verfügung zu stellen, die jeweils auf dem Trainings-Datensatz basieren.

Diese Aufgabe wird durch ein Verfahren zum Erstellen eines Trainings-Datensatzes für eine optische Schienenwegerkennung sowie ein Verfahren zum Trainieren einer optischen Schienenwegerkennung, ein Verfahren zur Positionsbestimmung eines Schienenfahrzeugs und eine Recheneinheit zur Durchführung des Verfahrens zur Positionsbestimmung gelöst. Vorteilhafte Ausgestaltungen sind in den Unteransprüchen angegeben.

In einem Verfahren zum Erstellen eines Trainings-Datensatzes für eine optische Schienenwegerkennung werden zunächst erste Liniengraphiken aus realen Bildern von Schienen erzeugt, wobei die ersten Liniengraphiken den Verlauf von Schienen schematisch darstellen. Anschließend werden erzeugende gegnerische neuronale Netzwerke trainiert, wobei die erzeugenden gegnerischen neuronalen Netzwerke ein erzeugendes Netzwerk und ein klassifizierendes Netzwerk umfassen. Das erzeugende Netzwerk erzeugt jeweils eine erste Darstellung von Schienen aus den ersten Liniengraphiken. Das klassifizierende Netzwerk nimmt eine Einschätzung vor, ob die ersten Darstellungen durch das erzeugende Netzwerk erzeugt wurden oder eine reale Aufnahme von Schienen beinhalten. Das Trainieren erfolgt so lange, bis das erzeugende Netzwerk finale erste Darstellungen erzeugt, die vom klassifizierenden Netzwerk nicht mehr von realen Aufnahmen unterschieden werden können. Während des Trainierens werden Darstellungs-Parameter erlernt, anhand derer das erzeugende Netzwerk Darstellungen von Schienen aus Liniengraphiken erzeugen kann. Ferner werden zweite Liniengraphiken mit vorgegebenen Eigenschaften erzeugt, wobei dies nach dem vorherigen Schritt oder zeitglich zum vorherigen Schritt erfolgen kann. Anschließend werden zweite Darstellungen von Schienen aus den zweiten Liniengraphiken anhand der erlernten Darstellungs-Parameter des erzeugenden Netzwerks erzeugt, wobei eine Mehrzahl der zweiten Darstellungen von Schienen den Trainings-Datensatz für die optische Schienenwegerkennung bilden.

Die erzeugenden gegnerischen neuronalen Netzwerke (englisch auch "Generative Adversarial Networks" - GAN genannt) können dabei mit den für diese Netzwerke bekannten Verfahren trainiert werden. Wie für GAN-Architekturen typische können die erzeugenden gegnerischen neuronalen Netzwerke aus einem erzeugenden Netzwerk, genannt Generatornetzwerk und einem klassifizierenden Netzwerk, genannt Diskriminatornetzwerk, bestehen. Das Generatornetzwerk kann aus mehreren residualen Blöcken mit Upsampling-Ebenen in mehreren Maßstäben bestehen, um Bilder mit mehreren Auflösungen erzeugen zu können und um Merkmale höherer Ebenen zu erlernen. Im Unterschied zu ähnlichen Architekturen wie Pix2Pix lernt dieses Netzwerk räumliche Informationen darüber, wo sich die Schienen im gezeichneten Bild befinden, um sie präzise an der gleichen Stelle im Ausgabebild zu erzeugen. Da dieses Netzwerk außerdem nur ein Etikett (Schiene) beinhaltet, werden die Bilder während des Trainings in Stapeln normalisiert, indem die gelernte Modulation auf Aktivierungen angewendet wird, bei denen nur dieses Etikett vorhanden ist. Das Diskriminatornetzwerk kann einen einfachen Klassifikator auf den hochskalig erzeugten Bildern verwenden. Um eine schnellere Konvergenz zu erreichen, kann ein Diskriminatorverlust nur auf der Grundlage einer Klasseneinteilung von Schienenpixeln berechnet werden. Auf diese Weise kann das erzeugende gegnerische neuronale Netzwerk schnell lernen, reale Schienen auf einem unscharfen Hintergrund zu rekonstruieren. Um einen realistischeren Hintergrund ohne weitere Eingangsinformationen zu erzeugen, kann der Verlust des Klassifikators so modifiziert werden, dass er auf alle Pixel angewendet wird. Bei weiterem Training ist das Netzwerk auf diese Weise in der Lage, einen realistischeren Hintergrund zu erzeugen. Eine Eingabe in die erzeugenden gegnerischen neuronalen Netzwerke umfasst jedoch nicht, wie sonst üblich, ein Rauschen, sondern die ersten beziehungsweise zweiten Liniengraphiken. Da Linien der Liniengraphiken Schienen eines Schienenwegs symbolisieren, kann so ein deutlich schnelleres Training erreicht werden. Dadurch ist das erfindungsgemäße Verfahren deutlich effizienter verglichen mit der herkömmlichen Verwendung von erzeugenden gegnerischen neuronalen Netzwerken.

Die ersten Darstellungen können dabei entweder Aufnahmen realer Bahngleise umfassen, so dass die zweiten Darstellungen insbesondere Bahngleise abbilden. Alternativ können die ersten Darstellungen auch Aufnahmen realer Trambahngleise umfassen, also eher im urbanen Umfeld an oder auf Straßen angesiedelt sein. In diesem Fall bilden die zweiten Darstellungen ein urbanes Umfeld mit Trambahngleisen ab. Trambahnen können dabei auch als Straßenbahnen bezeichnet werden. Ferner ist eine Mischform, beispielsweise bei Stadtbahnen, möglich.

Es kann vorgesehen sein, dass die zweiten Liniengraphiken derart erzeugt werden, dass verschiedene reale Schienenanordnungen nachgebildet werden, so dass die zweiten Liniengraphiken, aus denen die zweiten Darstellungen erzeugt werden, möglichst alle real vorkommenden Gegebenheiten abbilden.

Die zweiten Darstellungen können dabei einer perspektivischen Ansicht eines Gleises beziehungsweise von Schienen entsprechen, wobei eine Aufnahmeposition der jeweiligen zweiten Darstellung einer im Frontbereich eines Schienenfahrzeugs angebrachter Kamera entspricht.

Die ersten Darstellungen können dabei Streckengleise ohne Weichen und Kreuzungen umfassen oder aber auch innerhalb eines Bahnhofs, im Bereich eines Gleisabzweigs oder innerhalb eines Rangierbahnhofs angesiedelt sein.

Durch dieses Verfahren wird es möglich, mit wenigen realen Bildern von Schienen das erzeugende Netzwerk so zu trainieren, dass fiktive zweite Darstellungen von Schienen erzeugt werden, die dann für ein Training einer optischen Schienenwegerkennung genutzt werden können. Dadurch können beispielsweise Lizenzgebühren für Fotos eingespart werden. Durch die zweiten Liniengraphiken, die als Eingabe für das erzeugende Netzwerk zur Erzeugung der zweiten Darstellungen verwendet werden, kann ein effizientes Verfahren bereitgestellt werden.

In einer Ausführungsform des Verfahrens werden die zweiten Liniengraphiken derart erzeugt, dass zumindest zwei Linien an einem unteren Bildrand beginnen und in einer perspektivischen Darstellung parallel verlaufen. Dadurch entsprechen Linien der zweiten Liniengraphik einem Schienenverlauf, der auch auf einer realen Aufnahme möglich ist. Somit können schneller realistische zweite Darstellungen erreicht werden.

In einer Ausführungsform des Verfahrens laufen die zwei Linien auf einen gemeinsamen Fluchtpunkt der perspektivischen Darstellung zu. Auch dadurch können schneller realistische zweite Darstellungen erzeugt werden.

In einer Ausführungsform des Verfahrens weisen die zwei Linien am unteren Bildrand den größten Abstand zueinander auf, verglichen mit einem Bereich der zweiten Liniengraphik entfernt vom unteren Bildrand. Auch dies ermöglicht ein schnelleres Erzeugen von realistischen zweiten Darstellungen.

In einer Ausführungsform des Verfahrens werden mehr als zwei Linien, insbesondere eine gerade Anzahl von mehr als zwei Linien bei der Erzeugung der zweiten Liniengraphik verwendet. Auch dies ermöglicht ein schnelleres Erzeugen von realistischen zweiten Darstellungen.

In einer Ausführungsform des Verfahrens weisen jeweils zwei Linien innerhalb der zweiten Liniengraphik in perspektivischer Darstellung einen vorgegebenen Abstand auf. Diese beiden Linien entsprechen dann einem Gleis bestehend aus zwei Schienen. Auch dies ermöglicht ein schnelleres Erzeugen von realistischen zweiten Darstellungen.

In einer Ausführungsform des Verfahrens werden die zweiten Liniengraphiken zufällig anhand von vorgegebenen Erzeugungs-Parametern erstellt. Die Erzeugungs-Parameter können dabei vorgegebene Krümmungen von parallelen Linien, vorgegebene Anzahlen von Linien, vorgegebene Kreuzungen oder Abzweige von Linien sowie weitere Parameter umfassen.

Die so erstellten zweiten Darstellungen können in einem Verfahren zum Trainieren einer optischen Schienenwegerkennung verwendet werden. Hierzu werden die zweiten Darstellungen von Schienen, die mit dem erfindungsgemäßen Verfahren zum Erstellen eines Trainings-Datensatzes für eine optische Schienenwegerkennung erzeugt wurden, eingelesen und anschließend Schienen in den zweiten Darstellungen mit Hilfe eines neuronalen Netzwerks identifiziert, wobei dabei durch das neuronale Netzwerk Erkennungs-Parameter erlernt werden. Das neuronale Netzwerk kann dabei eingerichtet sein, aus eingebetteten Merkmalen ein höher aufgelöstes Bild mithilfe einer Mehrzahl von mehreren sogenannten "Upsampling convolutional layers", also hochinterpolierenden Faltenlagen, zu erzeugen. Anhand der Erkennungs-Parameter kann das neuronale Netzwerk dann Schienen auf realen Aufnahmen erkennen, die beispielsweise während der Fahrt eines Schienenfahrzeugs von einer in einem Frontbereich des Schienenfahrzeugs angebrachten Kamera erstellt werden.

In einem Verfahren zur Positionsbestimmung eines Schienenfahrzeugs wird ein Bild einer Kamera eingelesen, wobei die Kamera in einem Frontbereich des Schienenfahrzeugs angeordnet ist. Anschließend wird eine mit dem erfindungsgemäßen Verfahren zum Trainieren einer optischen Schienenwegerkennung trainierte optische Schienenwegerkennung durchgeführt und damit eine Schiene, auf der sich das Schienenfahrzeug bewegt mittels der optischen Schienenerkennung anhand der Erkennungs-Parameter identifiziert. Insbesondere kann dieses Verfahren eingesetzt werden, um bei mehrgleisigen Gleisabschnitten zu erkennen, auf welchem Gleis sich das Schienenfahrzeug befindet. Dies kann insbesondere das Erkennen umfassen, ob sich das Schienenfahrzeug auf einer zweigleisigen Strecke auf dem rechten oder dem linken Gleis befindet. Ferner können auch mehrere Gleise identifiziert werden, beispielsweise in einer Einfahr- oder Richtungsgruppe eines Rangierbahnhofs, oder wenn im Bereich eines Bahnhofs mehr als zwei Gleise vorhanden sind.

In einer Ausführungsform des Verfahrens zur Positionsbestimmung erfolgt das Identifizieren der Schiene anhand einer Position der mittels der optischen Schienenerkennung erkannten Schiene relativ zu einer Position des Bildes der Kamera. Insbesondere kann die Schiene Identifiziert werden, die im Bild der Kamera am unteren Bildrand in der Mitte angeordnet ist. In einer Ausführungsform des Verfahrens zur Positionsbestimmung wird ferner ein Positionssignal eingelesen, wobei das Identifizieren der Schiene zusätzlich anhand des Positionssignals erfolgt. Das Positionssignal kann dabei beispielsweise ein GPS-Signal sein oder ein auf Trägheitsnavigation basierendes Signal.

In einer Ausführungsform des Verfahrens zur Positionsbestimmung erfolgt eine erste Positionierung des Schienenfahrzeugs entlang der Schiene anhand des Positionssignals und erfolgt eine zweite Positionierung des Schienenfahrzeugs quer zur Schiene anhand der optischen Schienenerkennung. Insbesondere GPS-Signale und Trägheitsnavigation erlauben eine Positionsbestimmung in Schienenrichtung auf wenige Meter genau. Dies ist in Richtung der Schiene für die meisten Anwendungen völlig ausreichend. Nicht genau genug sind diese Verfahren jedoch, wenn es darum geht, bei mehrgleisigen Gleisabschnitten zu unterscheiden, auf welchem Gleis sich das Schienenfahrzeug befindet. Hier kann zusätzlich die optische Schienenerkennung mit dem beschriebenen Trainingsverfahren zum Einsatz kommen. In alternativen Ausführungsformen kann auch eine anders trainierte oder anders realisierte optische Schienenwegerkennung eingesetzt werden.

In einer Ausführungsform des Verfahrens zur Positionsbestimmung wird beim Identifizieren der Schiene ein Gleis ermittelt, auf welchem sich das Schienenfahrzeug bewegt.

In einer Ausführungsform des Verfahrens zur Positionsbestimmung ist das Gleis ein Gleis eines mehrgleisigen Gleisabschnitts.

Die Erfindung umfasst ferner eine Recheneinheit, umfassend ein neuronales Netzwerk, wobei die Recheneinheit eingerichtet ist, nach dem erfindungsgemäßen Verfahren zum Trainieren der optischen Schienenerkennung trainiert zu werden und nach der Durchführung des Trainings das erfindungsgemäße Verfahren zur Positionsbestimmung auszuführen.

Die oben beschriebenen Eigenschaften, Merkmale und Vorteile dieser Erfindung sowie die Art und Weise, wie diese erreicht werden, werden klarer und deutlicher verständlich durch die Erläuterungen der folgenden, stark vereinfachten, schematischen Darstellungen bevorzugter Ausführungsbeispiele. Hierbei zeigen in jeweils schematisierter Darstellung
- FIG 1: ein Ablaufdiagramm eines Verfahrens zum Erstellen eines Trainings-Datensatzes für eine optische Schienenwegerkennung;
- FIG 2: reale Bilder, Liniengraphiken und Darstellungen, die während des Trainings des Verfahrens verwendet werden können;
- FIG 3: erzeugende gegnerische neuronale Netzwerke;
- FIG 4: reale Bilder, Liniengraphiken und Darstellungen, die während des Trainings des Verfahrens verwendet werden können;
- FIG 5: reale Bilder, Liniengraphiken und Darstellungen, die während des Trainings des Verfahrens verwendet werden können;
- FIG 6: Liniengraphiken und Darstellungen, die während des Erstellens des Trainings-Datensatzes verwendet werden können;
- FIG 7: Liniengraphiken und Darstellungen, die während des Erstellens des Trainings-Datensatzes verwendet werden können;
- FIG 8: ein Ablaufdiagramm eines Trainings einer optischen Schienenwegerkennung;
- FIG 9: ein Ablaufdiagramm einer optischen Schienenwegerkennung;
- FIG 10: ein Schienenfahrzeug mit einer Recheneinheit; und
- FIG 11: eine Karte eines mehrgleisigen Gleisabschnitts.

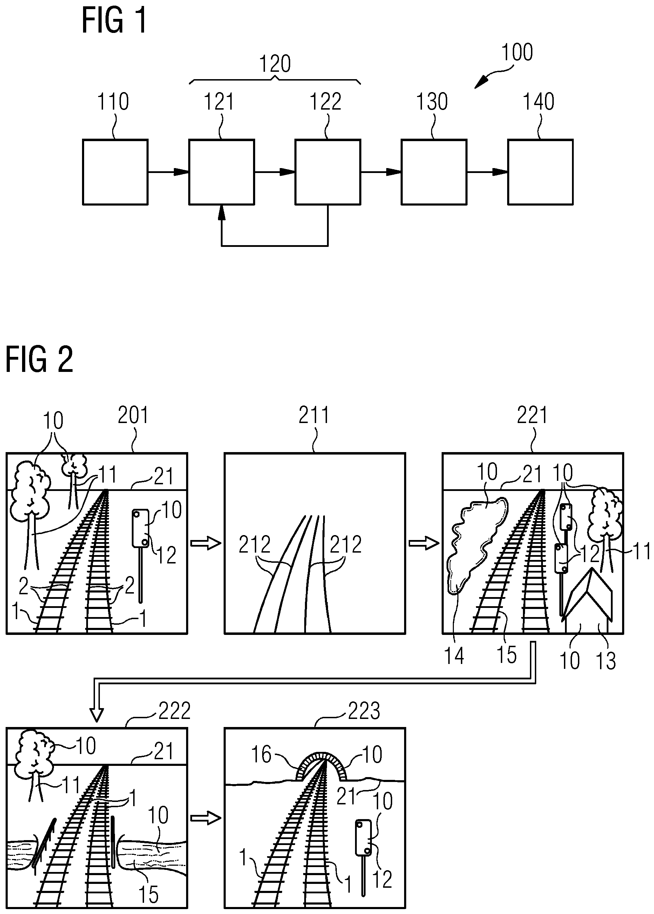

FIG 1 zeigt ein Ablaufdiagramm 100 eines Verfahrens zum Erstellen eines Trainings-Datensatzes für eine optische Schienenwegerkennung. Zunächst werden erste Liniengraphiken aus realen Bildern von Schienen in einem ersten Erzeugungsschritt 110 erzeugt, wobei die ersten Liniengraphiken den Verlauf von Schienen schematisch darstellen. Anschließend werden erzeugende gegnerische neuronale Netzwerke in einem ersten Trainingsschritt 120 trainiert, wobei die erzeugenden gegnerischen neuronalen Netzwerke ein erzeugendes Netzwerk und ein klassifizierendes Netzwerk umfassen. Das erzeugende Netzwerk erzeugt jeweils eine erste Darstellung von Schienen aus den ersten Liniengraphiken in einem Generierungsschritt 121. Das klassifizierende Netzwerk nimmt in einem Einschätzungsschritt 122 eine Einschätzung vor, ob die ersten Darstellungen durch das erzeugende Netzwerk erzeugt wurden oder eine reale Aufnahme von Schienen beinhalten. Das Trainieren erfolgt so lange, bis das erzeugende Netzwerk finale erste Darstellungen erzeugt, die vom klassifizierenden Netzwerk nicht mehr von realen Aufnahmen unterschieden werden können. Während des Trainierens werden Darstellungs-Parameter erlernt, anhand derer das erzeugende Netzwerk Darstellungen von Schienen aus Liniengraphiken erzeugen kann. Anschließend werden zweite Liniengraphiken mit vorgegebenen Eigenschaften in einem zweiten Erzeugungsschritt 130 erzeugt. In einem alternativen, nicht gezeigten Ablauf kann dies zeitglich zum Trainingsschritt 120 erfolgen. Anschließend werden in einem Darstellungsschritt 140 zweite Darstellungen von Schienen aus den zweiten Liniengraphiken anhand der erlernten Darstellungs-Parameter des erzeugenden Netzwerks erzeugt, wobei eine Mehrzahl der zweiten Darstellungen von Schienen den Trainings-Datensatz für die optische Schienenwegerkennung bilden. Im Zuge der folgenden Darstellungen wird dieses Verfahren genauer erläutert.

FIG 2 zeigt verschiedene, während des Verfahrens durchlaufene reale Bilder, Liniengraphiken und Darstellungen, die während dem ersten Erzeugungsschritt und dem ersten Trainingsschritt 120 relevant sind. Zunächst wird im ersten Erzeugungsschritt 110 aus einem realen Bild 201 eine erste Liniengraphik 211 erzeugt. Das reale Bild 201 stellt einen Verlauf zweier paralleler Gleise 1 dar. Die Gleise 1 laufen bis zu einem Horizont 21. Neben den Gleisen 1 sind Objekte 10 angeordnet, hier zwei Bäume 11 und ein Signal 12. Aus dem realen Bild 201 werden vier Linien 212 extrahiert, die den Verlauf von Schienen 2 der Gleise 1 des realen Bilds 201 wiedergeben. Die erste Liniengraphik 211 umfasst also eine schematische Darstellung der Schienen 2 in Form von Linien 212. Dabei kann die erste Liniengraphik 211 eine Darstellung in Schwarzweiß oder in zwei Farben umfassen, wobei die beiden Farben idealerweise einen großen Kontrast aufweisen (beispielsweise dunkelrot und hellgrün).

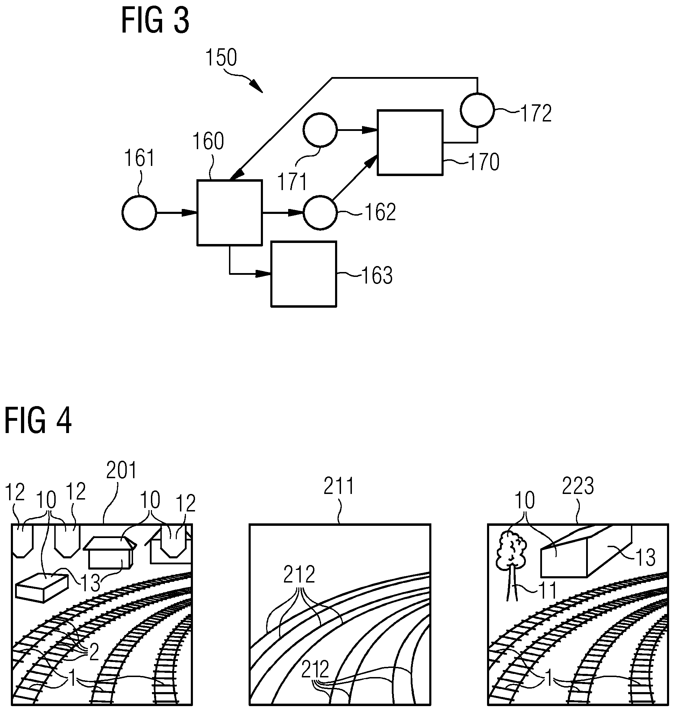

Nur erfolgt der erste Trainingsschritt 120. In diesem wird im Generierungsschritt 121 eine erste Darstellung 221 von Schienen 2 erzeugt. Die erste Darstellung umfasst dabei zwei Gleise 1, einen Horizont 21 und verschiedene Objekte 10, in diesem Fall mehrere Signale 12, ein Gebäude 13 und ein Gebüsch 14. Die erste Darstellung wird dabei durch ein erzeugendes Netzwerk eines erzeugenden gegnerischen neuronalen Netzwerks erzeugt. Dies wird anhand von FIG 3 genauer erläutert.

FIG 3 zeigt erzeugende gegnerische neuronale Netzwerke 150. Die erzeugenden gegnerischen neuronalen Netzwerken 150 umfassen dabei ein erzeugendes Netzwerk 160 und ein klassifizierendes Netzwerk 170. Eine erste Eingabe 161 des erzeugenden Netzwerks stellt dabei die erste Liniengraphik 211 der FIG 2 dar. Das erzeugende Netzwerk 160 erzeugt aus dieser ersten Liniengraphik eine erste Ausgabe 162, die der ersten Darstellung 221 der FIG 2 entspricht. Dies kann im Rahmen des Generierungsschritts 121 der FIG 1 erfolgen. Dabei werden Darstellungsparameter 163 verwendet, mit denen das erzeugende Netzwerk aus der ersten Liniengraphik 211 die erste Darstellung 221 erzeugt hat. Ein klassifizierendes Netzwerk 170 erhält als zweite Eingabe 171 das reale Bild 201 der FIG 2 und die erste Ausgabe 162, also die erste Darstellung 221 des erzeugenden Netzwerks 160. Das klassifizierende Netzwerk 170 nimmt nun eine Einschätzung vor, ob die erste Darstellung 221 durch das erzeugende Netzwerk 160 erzeugt wurde oder eine reale Aufnahme von Schienen 2 beinhaltet. Dies kann im Rahmen des Klassifizierungsschritts 122 der FIG 1 erfolgen. Dieses Ergebnis wird in einer zweiten Ausgabe 172 ausgegeben. In der ersten Darstellung 221 der FIG 2 sind beispielsweise zwei dicht hintereinander angeordnete Signale 12 dargestellt. Dadurch kann das klassifizierende Netzwerk 170 beispielsweise erkennen, dass die erste Darstellung 221 keine reale Aufnahme von Schienen 2 beinhaltet, sondern durch das erzeugende Netzwerk 160 erzeugt wurde. Die zweite Ausgabe 172 wird nun an das erzeugende Netzwerk 160 weitergegeben, so dass eine weitere erste Darstellung erzeugt werden kann.

Eine weitere erste Darstellung 222 ist ebenfalls in FIG 2 abgebildet, die ebenfalls im Rahmen des Generierungsschritts 121 der FIG 1 mittels des erzeugenden Netzwerks 160 erzeugt wurde. Die weitere erste Darstellung 222 umfasst dabei zwei Gleise 1, einen Horizont 21 und verschiedene Objekte 10, in diesem Fall einen Baum 11 und einen Bachlauf 15. Die weitere erste Darstellung 222 kann dabei schon deutlich realistischer sein als die erste Darstellung 221. Beim erneuten Durchlaufen des erzeugenden Netzwerks werden dabei auch die Darstellungs-Parameter 163 modifiziert. Wird im Rahmen des Klassifizierungsschritts 122 der FIG 1 durch das klassifizierende Netzwerk 170 festgestellt, dass auch die weitere erste Darstellung 222 keine reale Aufnahme von Schienen 2 beinhaltet, sondern durch das erzeugende Netzwerk 160 erzeugt wurde, kann dieser Abschnitt des Verfahrens nun erneut durchlaufen werden, wobei die finale erste Darstellung 223 erzeugt wird. Die finale erste Darstellung 223 umfasst dabei zwei Gleise 1, einen Horizont 21 und verschiedene Objekte 10, in diesem Fall ein Tunnelportal 16 und ein Signal 12. Die bei der Erstellung der finalen ersten Darstellung 223 verwendeten Darstellungs-Parameter 163 werden wiederum gespeichert und können für weitere Verfahrensschritte verwendet werden.

Das erläuterte Verfahren kann mehrfach durchlaufen werden, bis dem erzeugenden Netzwerk 163 Darstellungs-Parameter 163 vorliegen, die ein Erstellen der finalen ersten Darstellungen 223 für verschiedene Ausgangsbilder ermöglichen.

FIG 4 zeigt ein reales Bild 201, welches vier Gleise 1 und mehrere Objekte 10 zeigt. Die Objekte 10 umfassen dabei Signale 12 und Gebäude 13. Auch aus diesem realen Bild 201 kann eine erste Liniengraphik 211 im ersten Erzeugungsschritt 110 aus einem realen Bild 201 erzeugt werden und mit dieser ersten Liniengraphik dann das in FIG 1 bzw. 3 beschriebene Verfahren durchlaufen werden, um zur finalen ersten Darstellung 223 zu gelangen.

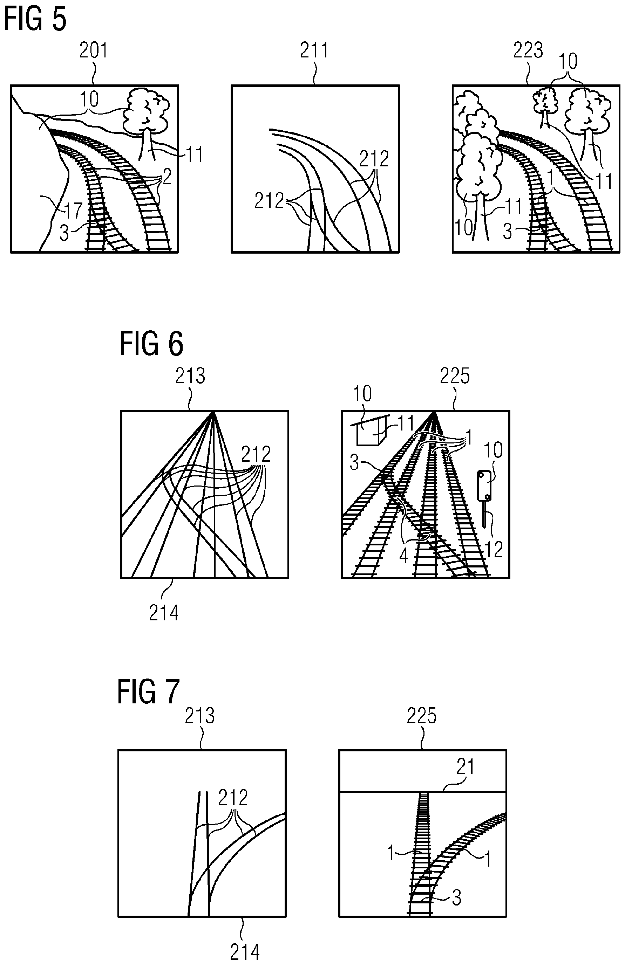

FIG 5 zeigt ein reales Bild 201, welches vier Gleise 1 und mehrere Objekte 10 zeigt. Die Objekte 10 umfassen dabei Bäume 11 und einen Bergrücken 17. Auch aus diesem realen Bild 201 kann eine erste Liniengraphik 211 im ersten Erzeugungsschritt 110 aus einem realen Bild 201 erzeugt werden und mit dieser ersten Liniengraphik dann das in FIG 1 bzw. 3 beschriebene Verfahren durchlaufen werden, um zur finalen ersten Darstellung 223 zu gelangen. Bei diesem Beispiel ist insbesondere zu sehen, dass ein hinter dem Bergrücken 17 zumindest teilweise nicht mehr sichtbares Gleis 1 in der finalen ersten Darstellung 223 ebenfalls verdeckt ist, hier durch mehrere Bäume. Ebenfalls umfasst das reale Bild 201 eine Weiche 3, die in der ersten Liniengraphik 211 und in der finalen ersten Darstellung 223 sichtbar ist.

Nachdem das Verfahren nun für mehrere reale Bilder 201 durchlaufen wurde, können die Darstellungs-Parameter verwendet werden, um aus im zweiten Erzeugungsschritt 130 erzeugten zweiten Liniengraphiken im Darstellungsschritt 140 zweite Darstellungen zu erzeugen, die dann den Trainings-Datensatz für eine optische Schienenwegerkennung bilden.

FIG 6 zeigt eine zweite Liniengraphik 213 mit mehreren Linien 212. Aus der zweiten Liniengraphik wird im Darstellungsschritt 140 mit den erlernten Darstellungs-Parametern 163 eine zweite Darstellung 225 erzeugt, die wieder Gleise 1 und Objekte 10 umfasst. Die Gleise 1 weisen dabei Kreuzungen 4 und Weichen 3 auf. Dies kann beispielsweise zur Folge haben, dass die Objekte 10 mehr Gebäude 13 oder das Umfeld eines Bahnhofs abbilden.

FIG 7 zeigt ebenfalls eine zweite Liniengraphik 213 mit mehreren Linien 212. Aus der zweiten Liniengraphik wird im Darstellungsschritt 140 mit den erlernten Darstellungs-Parametern 163 eine zweite Darstellung 225 erzeugt, die wieder Gleise 1 umfasst. Die Gleise 1 weisen dabei eine Weiche 3 auf.

Die zweiten Darstellungen 225 der FIG 6 und 7 sowie weitere mittels des erzeugenden Netzwerks 160 im zweiten Darstellungsschritt 140 erzeugte zweite Darstellungen 225 bilden den Trainings-Datensatz.

In einem Ausführungsbeispiel werden die zweiten Liniengraphiken 213 derart erzeugt, dass zumindest zwei Linien 212 an einem unteren Bildrand 214 beginnen und in einer perspektivischen Darstellung parallel verlaufen. Dies ist beispielsweise in den FIG 6 und 7 so dargestellt.

In einem Ausführungsbeispiel verlaufen die zwei Linien 212 auf einen gemeinsamen Fluchtpunkt der perspektivischen Darstellung zu. Dies ist beispielsweise in FIG 6 so dargestellt.

In einem Ausführungsbeispiel weisen die zwei Linien 212 am unteren Bildrand 214 den größten Abstand zueinander aufweisen, verglichen mit einem Bereich der zweiten Liniengraphik 213 entfernt vom unteren Bildrand 214. Dies ist beispielsweise in den FIG 6 und 7 so dargestellt.

In einem Ausführungsbeispiel werden mehr als zwei Linien 212, insbesondere eine gerade Anzahl von mehr als zwei Linien 212 bei der Erzeugung der zweiten Liniengraphik 213 verwendet. Dies ist beispielsweise in FIG 6 so dargestellt.

In einem Ausführungsbeispiel weisen jeweils zwei Linien 212 innerhalb der zweiten Liniengraphik 213 in perspektivischer Darstellung einen vorgegebenen Abstand auf. Dies ist beispielsweise in den FIG 6 und 7 so dargestellt.

In einem Ausführungsbeispiel werden die zweiten Liniengraphiken 213 zufällig anhand von vorgegebenen Erzeugungs-Parametern erstellt. Die Erzeugungs-Parameter können dabei Anordnungen der Linien 212 zueinander oder eine Positionierung der Linien 212 innerhalb der zweiten Liniengraphiken 213 beeinflussen.

Die Erzeugungs-Parameter können insbesondere Vorgaben beinhalten, wie die Linien 212 der zweiten Liniengraphiken 213 angeordnet sein sollen. Die Erzeugungs-Parameter können dabei derart ausgestaltet sein, dass in perspektivischer Darstellung parallele Linien 212 erzeugt werden. Ferner kann vorgesehen sein, dass die Erzeugungs-Parameter eine Erzeugung von Linien 212 parallel zum unteren Bildrand 214 ausschließen. Die Erzeugungs-Parameter können derart ausgestaltet sein, dass die Linien 212 durchgehend ohne Unterbrechungen sind.

Je nach Anordnung der Linien 212 der zweiten Liniengraphiken 213 können die zweiten Darstellungen 225 dabei unterschiedliche Umgebungen der Schienen 2 beziehungsweise Gleise 1 zeigen, wobei ein oder zwei parallel verlaufende Gleise 1 eher eine Bildumgebung mit einer Landschaft, Wald, Wiesen, Feldern, Gebirge und eventuell einzelnen Gebäuden 13 zur Folge haben können, während mehrere Gleise 1 eher eine Umgebung wie in einem Bahnhof, einem urbanen Gebiet oder in einem Rangierbahnhof zur Folge haben können. Wird das Verfahren für Trambahnen angewendet, können die zweiten Darstellungen 225 insgesamt eine deutlich urbanere Umgebung darstellen.

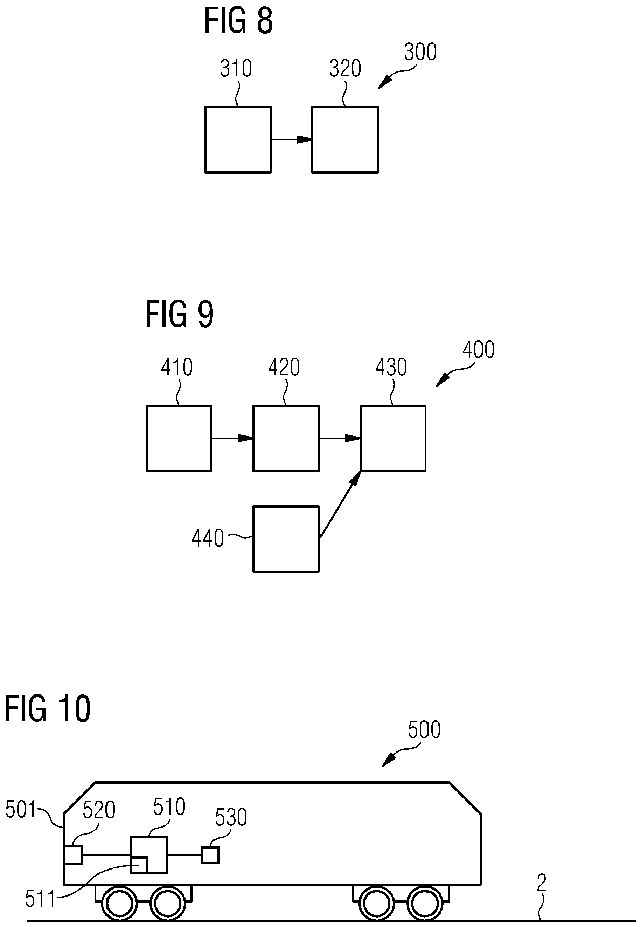

FIG 8 zeigt ein Ablaufdiagramm 300 eines Verfahrens zum Trainieren einer optischen Schienenwegerkennung. In einem ersten Einleseschritt 310 werden zweite Darstellungen 225 von Schienen 2, die mit dem im Zusammenhang mit den FIG 1 bis 7 erläuterten Verfahren erzeugt wurden, eingelesen. Anschließend werden in einem ersten Identifizierungsschritt 320 Schienen 2 in den zweiten Darstellungen 225 mit Hilfe eines neuronalen Netzwerks identifiziert, wobei dabei durch das neuronale Netzwerk Erkennungs-Parameter erlernt werden. Die zweiten Darstellungen 225 dienen also als Trainings-Datnesatz. Zum Trainieren dieses neuronalen Netzwerks kann es vorgesehen sein, dass neben den zweiten Darstellungen 225 auch die zweiten Liniengraphiken 213 eingelesen werden, so dass die identifizierten Schienen 2 mit den Linien 212 der zweiten Liniengraphiken 213 verglichen werden und so die Erkennungs-Parameter optimiert werden können. Dadurch wird ein effizientes Training des neuronalen Netzwerks möglich, welches auf dem Trainings-Datensatz beruht und für welches keine Bildrechte erworben werden müssen.

FIG 9 zeigt ein Ablaufdiagramm 400 eines Verfahrens zur Positionsbestimmung eines Schienenfahrzeugs. In einem zweiten Einleseschritt 410 wird ein Bild einer Kamera eingelesen, wobei die Kamera in einem Frontbereich des Schienenfahrzeugs angeordnet ist. In einem Schienenerkennungsschritt 420 wird eine optische Schienenwegerkennung durchgeführt. Diese kann nach dem Verfahren der FIG 8 trainiert worden sein. In einem zweiten Identifizierungsschritt 430 wird eine Schiene 2, auf der sich das Schienenfahrzeug bewegt mittels der optischen Schienenerkennung anhand der Erkennungs-Parameter identifiziert. Es kann vorgesehen sein, dass neben der Schiene 2 oder mithilfe der Schiene 2 auch das Gleis 1 identifiziert wird, auf dem sich das Schienenfahrzeug bewegt.

FIG 10 zeigt ein Schienenfahrzeug 500 auf einer Schiene 2. Das Schienenfahrzeug 500 weist in einem Frontbereich 501 eine Kamera 520 auf, mit der Aufnahmen einer Schiene beziehungsweise eines Gleises erstellt werden können. Ferner weist das Schienenfahrzeug 500 eine Recheneinheit 510 auf, die mit dem Verfahren der FIG 8 trainiert werden kann und die das Verfahren der FIG 9 ausführen kann.

In einem Ausführungsbeispiel erfolgt das Identifizieren der Schiene 2 anhand einer Position der mittels der optischen Schienenerkennung erkannten Schiene 2 relativ zu einer Position des Bildes der Kamera 520.

In FIG 9 ist ein zusätzlicher optionaler Positionserfassungsschritt 440 gezeigt, in dem ein Positionssignal eingelesen wird. Das Positionssignal kann dabei mittels eines in FIG 10 dargestellten optionalen Positionssensors 530 bereitgestellt werden. Das Identifizieren der Schiene 2 erfolgt zusätzlich anhand des Positionssignals. Das Positionssignal kann dabei beispielsweise ein GPS-Signal sein. Neben dem Positionssignal kann das Verfahren zur optischen Schienenerkennung eingesetzt werden, um zu identifizieren, auf welchen Schienen 2 und damit auf welchem Gleis sich das Schienenfahrzeug 500 bewegt.

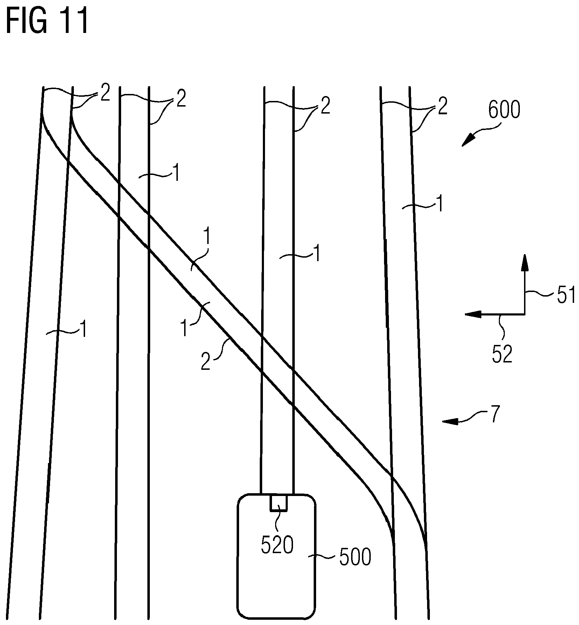

FIG 11 zeigt eine Karte 600 mehrerer Schienen 2 und Gleise 1. Die Karte 600 entspricht dabei einem Gleissystem, welches ähnlich in der zweiten Liniengraphik 213 der FIG 6 dargestellt ist. Eine erste Richtung 51 verläuft entlang der Haupterstreckungsrichtung der Schienen 2 beziehungsweise Gleise 1. Eine zweite Richtung 52 verläuft quer zur ersten Richtung und damit quer zur Haupterstreckungsrichtung der Schienen 2 beziehungsweise Gleise 1.

In einem Ausführungsbeispiel erfolgt eine erste Positionierung des Schienenfahrzeugs 500 entlang der Schiene 2 anhand des Positionssignals. Eine zweite Positionierung des Schienenfahrzeugs 500 erfolgt quer zur Schiene 2 anhand der optischen Schienenerkennung. Ein GPS-Signal ist in der ersten Richtung 51 und in der zweiten Richtung 52 in etwa gleich genau. Entlang der Schiene 2 beziehungsweise des Gleises 1 in der ersten Richtung 51 reicht das GPS-Signal meistens aus, um einen Schienenkilometer, bei dem sich das Schienenfahrzeug 500 befindet, zu ermitteln. Quer zur Schiene 2 beziehungsweise des Gleises 1 in der zweiten Richtung 52 reicht das GPS-Signal meistens nicht aus, um zu ermitteln, auf welchem der Gleise 1 sich das Schienenfahrzeug 500 befindet. Hier kann dann das beschriebene Verfahren zur optischen Schienenwegerkennung angewendet werden. Im Schienensystem der FIG 11 kann dabei beispielsweise erkannt werden, dass sich das Schienenfahrzeug 500 auf dem zweiten Gleis 1 von rechts befindet.

In einem Ausführungsbeispiel wird beim Identifizieren der Schiene 2 ein Gleis 1 ermittelt, auf welchem sich das Schienenfahrzeug 500 bewegt, beispielsweise das zweite Gleis 1 von rechts. In einem Ausführungsbeispiel ist das Gleis 1 ein Gleis 1 eines mehrgleisigen Gleisabschnitts 7, wie in FIG 11 dargestellt.

Die Erfindung umfasst ebenfalls die Recheneinheit 510 der FIG 11. Die Recheneinheit 510 umfasst ein neuronales Netzwerk 511 und ist eingerichtet, nach dem Verfahren zum Trainieren der FIG 8 trainiert zu werden und nach der Durchführung des Trainings das Verfahren der FIG 9 auszuführen.

## Patentansprüche

1. Verfahren (100) zum Erstellen eines Trainings-Datensatzes für eine optische Schienenwegerkennung, mit den folgenden Schritten:
- Erzeugung (110) von ersten Liniengraphiken (211) aus realen Bildern (201) von Schienen (2), wobei die ersten Liniengraphik (211) den Verlauf von Schienen (2) schematisch darstellen;
- Trainieren (120) von erzeugenden gegnerischen neuronalen Netzwerken (150), wobei die erzeugenden gegnerischen neuronalen Netzwerke (150) ein erzeugendes Netzwerk (160) und ein klassifizierendes Netzwerk (170) umfassen, wobei das erzeugende Netzwerk (160) jeweils eine erste Darstellung (221, 222, 223) von Schienen 2 aus den ersten Liniengraphiken (211) erzeugt und das klassifizierende Netzwerk (170) eine Einschätzung vornimmt, ob die ersten Darstellungen (221, 222, 223) durch das erzeugende Netzwerk (160) erzeugt wurden oder eine reale Aufnahme von Schienen 2 beinhalten, wobei das Trainieren so lange erfolgt, bis das erzeugende Netzwerk (160) finale erste Darstellungen (223) erzeugt, die vom klassifizierenden Netzwerk (170) nicht mehr von realen Aufnahmen unterschieden werden können, wobei während des Trainierens (120) Darstellungs-Parameter (163) erlernt werden, anhand derer das erzeugende Netzwerk (160) Darstellungen (221, 222, 223, 225) von Schienen aus Liniengraphiken (211, 213) erzeugen kann;
- Erzeugen von zweiten Liniengraphiken (213) mit vorgegebenen Eigenschaften;
- Erzeugen von zweiten Darstellungen (225) von Schienen (2) aus den zweiten Liniengraphiken (225) anhand der erlernten Darstellungs-Parameter (163) des erzeugenden Netzwerks (160), wobei eine Mehrzahl der zweiten Darstellungen (225) von Schienen (2) den Trainings-Datensatz für die optische Schienenwegerkennung bilden.

2. Verfahren (100) nach Anspruch 1, wobei die zweiten Liniengraphiken (213) derart erzeugt werden, dass zumindest zwei Linien (212) an einem unteren Bildrand (214) beginnen und in einer perspektivischen Darstellung parallel verlaufen.

3. Verfahren (100) nach Anspruch 2, wobei die zwei Linien (212) auf einen gemeinsamen Fluchtpunkt der perspektivischen Darstellung zulaufen.

4. Verfahren (100) nach Anspruch 2 oder 3, wobei die zwei Linien (212) am unteren Bildrand (214) den größten Abstand zueinander aufweisen, verglichen mit einem Bereich der zweiten Liniengraphik (213) entfernt vom unteren Bildrand (214).

5. Verfahren (100) nach einem der Ansprüche 2 bis 4, wobei mehr als zwei Linien (212), insbesondere eine gerade Anzahl von mehr als zwei Linien (212) bei der Erzeugung der zweiten Liniengraphik (213) verwendet werden.

6. Verfahren (100) nach Anspruch 5, wobei jeweils zwei Linien (212) innerhalb der zweiten Liniengraphik (213) in perspektivischer Darstellung einen vorgegebenen Abstand aufweisen.

7. Verfahren (100) nach einem der Ansprüche 1 bis 6, wobei die zweiten Liniengraphiken (213) zufällig anhand von vorgegebenen Erzeugungs-Parametern erstellt werden.

8. Verfahren (300) zum Trainieren einer optischen Schienenwegerkennung mit den folgenden Schritten:
- Einlesen (310) von zweiten Darstellungen (225) von Schienen (2), die mit dem Verfahren der Ansprüche 1 bis 7 erzeugt wurden;
- Identifizieren (320) von Schienen (2) in den zweiten Darstellungen (225) mit Hilfe eines neuronalen Netzwerks (511), wobei dabei durch das neuronale Netzwerk (511) Erkennungs-Parameter erlernt werden.

9. Verfahren (400) zur Positionsbestimmung eines Schienenfahrzeugs (500) mit den folgenden Schritten:
- Einlesen (410) eines Bildes einer Kamera (520), wobei die Kamera (520) in einem Frontbereich (501) des Schienenfahrzeugs (500) angeordnet ist;
- Durchführen (420) einer optischen Schienenwegerkennung, welche nach dem Verfahren (300) des Anspruchs 8 trainiert wurde;
- Identifizieren (430) einer Schiene (2), auf der sich das Schienenfahrzeug (500) bewegt mittels der optischen Schienenerkennung anhand der Erkennungs-Parameter.

10. Verfahren (400) nach Anspruch 9, wobei das Identifizieren der Schiene (2) anhand einer Position der mittels der optischen Schienenerkennung erkannten Schiene (2) relativ zu einer Position des Bildes der Kamera (520) erfolgt.

11. Verfahren (400) nach Anspruch 9 oder 10, wobei ferner ein Positionssignal eingelesen wird (440), wobei das Identifizieren der Schiene (2) zusätzlich anhand des Positionssignals erfolgt.

12. Verfahren (400) nach Anspruch 11, wobei eine erste Positionierung des Schienenfahrzeugs (500) entlang (51) der Schiene (2) anhand des Positionssignals und eine zweite Positionierung des Schienenfahrzeugs (500) quer (52) zur Schiene (2) anhand der optischen Schienenerkennung erfolgen.

13. Verfahren (400) nach einem der Ansprüche 9 bis 12, wobei beim Identifizieren der Schiene (2) ein Gleis (1) ermittelt wird, auf welchem sich das Schienenfahrzeug (500) bewegt.

14. Verfahren (400) nach Anspruch 13, wobei das Gleis (1) ein Gleis (7) eines mehrgleisigen Gleisabschnitts (7) ist.

15. Recheneinheit (510), umfassend ein neuronales Netzwerk (511), wobei die Recheneinheit (500) eingerichtet ist, nach dem Verfahren (300) zum Trainieren nach Anspruch 8 trainiert zu werden und nach der Durchführung des Trainings das Verfahren (400) nach den Ansprüchen 9 bis 14 auszuführen.
